# FASCICULE DE BREVET EUROPEEN

(11) **EP 1 847 379 B1**
(45) Date de publication et mention de la délivrance du brevet: **13.01.2016**
(21) Numéro de dépôt: 07011636.3
(22) Date de dépôt: 28.02.2003
(51) Int. Cl.: B29C 69/02, B29C 47/06, B29C 55/02, B29C 63/10, B29C 65/14, F16L 9/12

(54) **Procédé d'assemblage de bandes multicouches**
Verfahren zum Verbinden von mehrschichtigen Bändern
Process for bonding multilayer webs

(30) Priorité: 04.03.2002 FR 0202732
(43) Date de publication de la demande: 24.10.2007
(62) Demande divisionnaire de: 03743355.4
(73) Titulaire: Egeplast Werner Strumann GmbH & Co. KG, 48268 Greven (DE)
(72) Inventeur: Matz, Pierre, 1457 Nil Saint-Vincent (BE); Beullekens, Frédéric, 1330 Rixensart (BE); Dehennau, Claude, 1410 Waterloo (BE)
(74) Mandataire: Fritz & Brandenburg Patentanwälte

(56) Documents cités:
- EP-A2- 0 143 567
- DE-A1- 19 954 440
- GB-A- 2 276 584
- US-A- 4 758 462
- US-A- 5 945 205

## Description

La présente invention concerne un procédé d'assemblage de bandes multicouches, qui sont constituées d'un polymère thermoplastique, à l'aide d'un rayonnement électromagnétique pour la réalisation d'un tube renforcé par au moins une couche de bandes en matière plastique orientée, les bandes étant enroulées et soudées autour d'un support de forme tubulaire.

Pour des applications diverses, on cherche souvent à produire un assemblage en matière plastique qui améliore les propriétés de résistance mécanique des composants de l'assemblage.

Il est par exemple connu de réaliser des structures composites en matière plastique de haute rigidité et de haute résistance mécanique par assemblage d'éléments en matière plastique orientée selon la technique du soudage. On peut notamment comprimer des empilements de fibres en matière plastique orientée maintenues à une température proche de leur température de fusion de manière à maintenir en contact intime les parties superficielles fondues et réaliser leur assemblage par soudage.

Ce procédé est toutefois long à mettre en oeuvre et difficile à contrôler, Il n'est vraiment utilisable que lorsqu'il s'agit d'assembler des éléments compacts en matière plastique (demande de brevet GB-A-2 253 420).

On connaît aussi par le brevet européen EP-B1-0 904 441 un procédé de réalisation de grilles formées de deux réseaux de bandes parallèles en matière plastique orientée, soudés au laser infrarouge, les deux réseaux de bandes faisant entre eux un angle proche de 90 °. Chaque bande est une structure à deux couches comprenant une couche transparente au rayonnement infrarouge et une couche chargée en noir de carbone qui absorbe le rayonnement.

Ce procédé fournit toutefois une structure qui reste souple et ne convient pas pour la réalisation de corps creux devant résister à la pression.

Le document US 5 945 205 A divulgue une bande multicouche comprenant au moins une couche en matière plastique, orientée dans au moins une direction et transparente à un rayonnenment électromagnétique, la bande comprenant au moins une couche comprenant une matière absorbant ce rayonnement électromagnétique, et la bande étant constituée d'un polymère thermoplastique choisies parmi les polyoléfines. Les couches extérieures de cette bande sont transparentes, tandis qu'une couche au coeur contient la matière absorbante. Donc il est impossible de fondre une couche extérieure par un rayonnenment électromagnétique afin de souder la bande sur un support de forme tubulaire.

Par le brevet US 4 758 462 A on connaît un film opaque orienté dans deux directions comprenant une couche de coeur contenant un pigment absorbant la lumière et aussi contenant des vides. A cause de ces vides des films de ce type ne sont pas appropriés pour être utilisés pour la fabrication des tubes renforcées de haute résistance.

Par le brevet EP 0 143 567 A2 on connaît des films décoratifs utilisés pour emballages comprenant un film base d'une matière polymère oléfine contenant un pigment absorbant comme du carbon. Le film comprenant deux couches est étirés pour former des vides dans la couche de surface du film cequi amène les mêmes désavantages mentionnés ci-dessus.

Le document GB 2 276 584 A divulgue un procédé d'assemblage de bandes, qui sont constituées d'un polymère thermoplastique, à l'aide d'un rayonnement électromagnétique pour la réalisation d'un tube renforcé, les bandes étant enroulées et soudées autour d'un support de forme tubulaire. On utilise des bandes étant suceptibles d'être soudées à l'aide du rayonnement électromagnétique avec une face sur le support préformé en matière plastique, les bandes comprenant une matière absorbant ce rayonnement életromagnétique. Dans ce document c'est toujours une bande avec une seule couche, qui est enroulée et soudée sur le support. Le procédé connu est donc limité aux applications techniques, où le support préformé à renforcer contient une matière absorbante dans la région de surface.

Par le document DE 199 54 440 A1 on connaît un procédé pour la realisation de corps creux où on part d'un corps plat de plastique, qui est plié en forme de tube et soudé à l'aide d'un rayonnement laser. Au regard de solidité et d'autres propriétés méchaniques ces tubes connus ne sont pas comparable aux tubes avec un coeur fabriqés par extrusion.

L'invention a pour but de fournir un procédé qui ne présente pas les inconvénients des procédés connus et qui convienne pour la réalisation de corps creux étanches capables de résister à la pression.

Un autre but de l'invention est de faciliter les opérations d'assemblage lorsqu'elles sont effectuées par la technique du soudage.

A cet effet l'invention propose qu'on utilise des bandes multicouches,
comprenant au moins une couche en matière plastique, orientée dans au moins une direction, et transparente à ce rayonnement électromagnétique,
les bandes étant susceptibles d'être soudées à l'aide du rayonnement électromagnétique avec une face sur le support préformé en matière plastique,
les bandes comprenant au moins une autre couche comprenant une matière absorbant ce rayonnement électromagnétique,
ces bandes sont obtenues dans un procédé de réalisation par coextrusion suivi d'un étirage, et ces bandes sont soit des bandes bicouches réalisées par coextrusion dans une filière plate soit des bandes multicouches qui sont constituées d'une seule couche de matière orientée transparente située entre deux couches plus minces comprenant la même matière plastique, orientée dans la même direction, que la couche transparente et comprenant en outre une matière absorbant le rayonnement.

Par procédé d'assemblage des bandes, on entend désigner un procédé qui associe les bandes entre elles et le support préformé afin qu'ils se comportent, du point de vue de leurs caractéristiques mécaniques, comme s'ils ne formaient plus qu'un corps unique.

Le procédé selon l'invention s'adresse à des bandes multicouches, c'est-à-dire à des bandes formées par la superposition d'au moins deux couches de composition distincte.

Dans ce procédé, l'assemblage est effectué par soudage des bandes les unes sur les autres et sur le support préformé. Par soudage, on désigne la technique d'assemblage qui consiste à fondre de la matière sur une faible profondeur de la surface des bandes à assembler, puis à presser les bandes ensemble et sur le support de manière telle que les surfaces fondues se touchent et que la matière en fusion qui les compose s'interpénètre.

Selon l'invention, la fusion est obtenue par illumination de la surface des bandes à souder au moyen d'un rayonnement énergétique.

Dans le procédé conforme à l'invention, ce rayonnement énergétique est un rayonnement électromagnétique. L'illumination peut se faire après pose de chaque couche individuelle de bandes, pendant l'opération d'enroulage ou après que celle-ci soit achevée sur toute la longueur du tube. Elle peut aussi se faire en une seule étape, après pose de toutes les couches de bandes, simultanément à I'opération d'enroulage de la dernière bande ou, au contraire, après que la dernière couche de bandes ait été posée sur la totalité de la longueur du tube.

La matière des bandes du procédé selon l'invention est constituée de matière plastique. Par matière plastique, on entend désigner toute matière comprenant au moins un polymère en résine de synthèse.

Comme matière plastique, peuvent convenir tous les types de matière thermoplastique.

Par matière thermoplastique, on désigne tout polymère thermoplastique, y compris les élastomères thermoplastiques, ainsi que leurs mélanges. On désigne par le terme "polymère" aussi bien les homopolymères que les copolymères (binaires ou ternaires notamment). Des exemples de tels copolymères sont, de manière non limitative : les copolymères à distribution aléatoire, les copolymères séquencés, les' copolymères à blocs et les copolymères greffés.

Tout type de polymère ou de copolymère thermoplastique dont la température de fusion est inférieure à la température de décomposition convient Les matières thermoplastiques de synthèse qui présentent une plage de fusion étalée sur au moins 10 degrés Celsius conviennent particulièrement bien. Comme exemple de telles matières, on trouve celles qui présentent une polydispersion de leur masse moléculaire.

En particulier, on peut utiliser des polyoléfines, des polyhalogénures de vinyle, des polyesters thermoplastiques, des polycétones, des polyamides et leurs copolymères. Un mélange de polymères ou de copolymères peut aussi être utilisé, de même qu'un mélange de matières polymériques avec des charges inorganiques, organiques et/ou naturelles comme, par exemple, mais non limitativement : le carbone, les sels et autres dérivés inorganiques, les fibres naturelles ou polymériques.

Les polyoléfines ont donné de bons résultats. Parmi les polyoléfines, le polyéthylène de haute densité (PEHD) est préféré.

Dans le procédé d'assemblage selon l'invention, on met en oeuvre des bandes en matière plastique qui ont une structure multicouche. De préférence, elles comprennent au moins une couche orientée. Par couche orientée, on entend une couche de matière plastique dont au moins 20 % en poids des chaînes moléculaires des polymères qui interviennent dans sa composition sont disposées dans au moins une même direction. Les couches orientées peuvent l'être dans plusieurs directions distinctes: Chacune des bandes peut ainsi comprendre des couches orientées simultanément dans plus d'une direction. Les bandes peuvent aussi, en variante, comprendre des couches orientées chacune dans une seule direction, différente pour chaque bande. De manière plus préférée, les couches orientées des bandes sont orientées dans une seule et même direction.

Selon l'invention, au moins une couche orientée des bandes mises en oeuvre dans le procédé est transparente au rayonnement électromagnétique employé pour la soudure. Par le vocable "transparente", on désigne une couche qui n'absorbe pas plus de 100 J/g de matière de la couche transparente.

Dans le procédé conforme à l'invention, les bandes mises en oeuvre comprennent aussi au moins une couche absorbant partiellement l'énergie transportée par le rayonnement électromagnétique. Par absorption partielle, on désigne une absorption de l'énergie du rayonnement qui n'est pas inférieure à 300 J/g de matière de la couche absorbante.

Selon l'invention, une face d'au moins une bande de l'assemblage est en outre soudée sur un support en matière plastique. La matière plastique du support peut être identique à celle de la couche transparente des bandes. Elle peut aussi, au contraire, constituer une matière plastique de nature différente de celle de la couche transparente des bandes.

De préférence, la soudure d'une face d'au moins une bande de l'assemblage est réalisée suivant la même technique de soudage au rayonnement électromagnétique que celle employée pour souder les bandes entre elles.

Le support en matière plastique sur lequel sont soudées les bandes peut être indifféremment de structure orientée ou non orientée.

De préférence, la structure du support en matière plastique n'est pas orientée.

Le nombre de bandes que l'on peut souder dans le procédé conforme à l'invention pour constituer l'assemblage peut varier dans de larges limites. On préfère généralement souder un nombre pair de bandes. En particulier, des résultats intéressants ont été obtenus lorsqu'on soude au moins deux bandes. Particulièrement intéressants sont les résultats obtenus lorsqu'on soude au moins quatre bandes. De préférence, on soude au plus huit bandes.

Selon un mode de réalisation préféré du procédé selon I'invention, le rayonnement électromagnétique utilisé a une longueur d'onde d'au moins 700 nm. De même, on préfère utiliser un rayonnement électromagnétique dont la longueur d'onde est au plus dé 1200 nm.

De manière particulièrement préférée, le rayonnement électromagnétique est un rayonnement-infrarouge. Une source IR à spectre continu sur l'ensemble de la gamme de fréquences émises peut convenir, en particulier les sources émettant principalement dans la gamme des longueurs d'onde non absorbées par les couches transparentes des bandes. De telles sources IR sont par exemple celles à très courte longueur d'onde, telles que celles émettant aux environs de 1000 nm.

Les meilleurs résultats ont été obtenus avec un rayonnement infrarouge cohérent de type laser. Des exemples de sources d'un tel rayonnement sont les lasers à diode et les lasers Nd:YAG (laser à grenat d'aluminate d'yttrium dopé au néodyme).

Selon un mode de réalisation particulièrement intéressant du procédé conforme à l'invention, les bandes sont enroulées et soudées autour d'un support de forme tubulaire. Le résultat obtenu par le procédé d'assemblage est dans ce cas un tube renforcé par au moins une couche de bandes en matière plastique orientée.

Le support tubulaire est généralement en matière plastique. La nature de cette matière plastique est choisie parmi celles qui sont compatibles au soudage avec la matière plastique des couches absorbantes des bandes. Avantageusement, on peut choisir une matière plastique non orientée pour le support tubulaire.

Dans le procédé conforme à l'invention, la nature de la matière responsable de l'absorption du rayonnement peut être diverse. Elle est choisie parmi les compositions qui sont aptes à se mélanger aisément à la matière plastique des couches absorbantes dans lesquelles ces compositions sont incorporées. De bons résultats ont été obtenus avec du noir de carbone. De préférence, l'absorption du rayonnement électromagnétique n'est pas totale. Par ailleurs, un taux d'absorption suffisant pour dégager de la chaleur doit être respecté. En pratique, des taux d'absorption d'au moins 300 J/g de matière de la couche absorbante ont donné de bons résultats.

Une forme de réalisation intéressante du procédé selon l'invention, compatible avec les formes de réalisation décrites ci-dessus consiste à réaliser un tube dont les bandes enroulées et soudées à sa périphérie extérieure présentent un angle par rapport à la direction du tube allant de 40 à 70 ° d'angle. D'excellents résultats ont été obtenus lorsque cet angle est proche de 55° d'angle. On s'arrange en outre pour que chaque épaisseur de bande soudée sur l'épaisseur précédente soit croisée avec cette dernière. En pratique, de bons résultats ont été obtenus lorsque l'angle par rapport à la direction du tube est l'opposé de celui de l'épaisseur de bande précédente.

L'invention concerne aussi un tube composite en matière plastique comprenant une âme en matière plastique non orientée, sur laquelle est soudée au moins deux épaisseurs adjacentes de bandes multicouches enroulées et soudées entre elles, selon lequel au moins une couche de chaque bande est constituée d'une matière plastique transparente aux rayonnements électromagnétiques et orientée dans au moins une direction et selon lequel au moins une autre couche de chaque bande comprend une matière absorbant ces rayonnements électromagnétiques.

De préférence, les épaisseurs adjacentes de bandes sont croisées, c'est-à-dire qu'elles sont disposées de manière à former entre elles un angle allant de 80 à 140 ° d'angle.

Les termes particuliers définis plus haut dans le cas du procédé conforme à l'invention ont ici la même signification pour le tube composite. Les différentes variantes du procédé décrites plus haut peuvent aussi se retrouver dans le tube composite conforme à l'invention.

De préférence, les couches des bandes comprenant de la matière absorbante sont orientées au même titre que les couches transparentes. L'orientation peut être totalement indépendante de celle des couches transparentes. Alternativement, on préfère que l'orientation des couches absorbantes soit disposée dans la même direction que celle des couches transparentes.

Une forme de réalisation particulière du tube selon l'invention comporte des bandes constituées d'une seule couche de matière orientée transparente située entre deux couches plus minces comprenant la même matière plastique, orientée dans la même direction, que la couche transparente et comprenant en outré une matière absorbant ce rayonnement. Dans cette forme de réalisation, la couche transparente de chacune des bandes présente avantageusement une absorption des rayonnements électromagnétiques de longueur d'onde allant de 700 à 1200 nm qui ne dépasse pas 100 J/g de matière de la couche transparente.

Les exemples qui suivent sont donnés en vue d'illustrer l'invention, sans en limiter en aucune manière la portée.

On a tout d'abord réalisé une bande bicouche par coextrusion dans une filière plate'de 400 mm de large et de 5 mm d'ouverture alimentée par un feedblock en demi-lune connecté à deux extrudeuses, la première de 60 mm de diamètre, à fourreau rainuré et vis d'extrusion barrière tournant à 50 t/m et débitant à 50 kg/h un polyéthylène haute densité de SOLVAY POLYOLEFIN EUROPE de marque ELTEX^{®} PE 100 TUB 121 identique à la résine commerciale hormis l'absence de pigment pour la couche transparente et la deuxième de 30 mm de diamètre, munie d'une vis pour polyoléfine tournant à 10 t/m et débitant 0,5 kg/h pour la couche absorbante. La résine utilisée dans la deuxième extrudeuse pour la couche absorbante a été la résine commerciale ELTEX^{®} PE 100 TUB 121 qui comprend une charge de noir de carbone.

La feuille bicouche sortant de la filière est ensuite passée dans une calandre lisseuse à 50 °C et a été transformée en bande orientée par conditionnement thermique à 115°C en passant sur un groupe de six cylindres de conditionnement suivi d'un étirage en deux passes successives dans un train d'étirage dont les cylindres évoluent à vitesse croissante (680 % d'étirage en première passe et 30 % en seconde passe). La bande orientée a ensuite été refroidie et a subi un léger retrait de l'ordre de 10% dans le sens longitudinal.

Les bandes orientées ont ensuite été enroulées manuellement sur une âme tubulaire en polyéthylène haute densité ELTEX^{®} PE 100 TUB 121 de 50 mm de diamètre extérieur et de 3,2 mm d'épaisseur de telle manière à croiser deux épaisseurs successives selon un angle de + 55 ° et de - 55 ° par rapport à l'axe du tube, la couche chargée en noir de carbone étant dirigée vers le tube.

On a ensuite enroulé les bandes sur la totalité de la surface extérieure du tube, après quoi le soudage de ces bandes entre elles et sur le tube a été effectué par balayage de la totalité de la surface de ce tube portant les bandes enroulées au moyen d'une source laser à diode de marque COHERENT^{®} de 30 W de puissance et de 800 nm de longueur d'onde dont le faisceau a été collimaté à 8 mm de diamètre. La vitesse linéaire de soudage et d'avancement du tube dans le faisceau laser a été de 0,72 m/min.

La résistance à l'éclatement du tube obtenu a ensuite été comparée à celle d'un tube identique n'ayant pas subi la dernière opération de soudage des bandes à l'aide du rayonnement laser. Les résultats obtenus ont été les suivants :

| | Bandes soudees | Bandes posées, non soudées |
|---|---|---|
| Pression d'éclatement, bar | 120 | 80 |

On voit que le soudage des bandes a apporté un supplément de résistance à l'éclatement de 50 %.

Le tube avec les bandes soudées obtenu n'étant composé que d'un seul type de résine, comprenant localement du noir de carbone, on peut facilement recycler les chutes de fabrication vers le processus de fabrication de l'âme tubulaire.

## Revendications

1. Procédé d'assemblage de bandes multicouches, qui sont constituées d'un polymère thermoplastique, à l'aide d'un rayonnement électromagnétique pour la réalisation d'un tube renforcé par au moins une couche de bandes en matière plastique orientée, les bandes étant enroulées et soudées autour d'un support de forme tubulaire,
**caractérisé en ce qu'**on utilise des bandes multicouches,
comprenant au moins une couche en matière plastique, orientée dans au moins une direction, et transparente à ce rayonnement électromagnétique,
les bandes étant susceptibles d'être soudées à l'aide du rayonnement électromagnétique avec une face sur le support préformé en matière plastique,
les bandes comprenant au moins une autre couche comprenant une matière absorbant ce rayonnement électromagnétique,
ces bandes sont obtenues dans un procédé de réalisation par coextrusion suivi d'un étirage, et ces bandes sont soit des bandes bicouches réalisées par coextrusion dans une filière plate
soit des bandes multicouches qui sont constituées d'une seule couche de matière orientée transparente située entre deux couches plus minces comprenant la même matière plastique, orientée dans la même direction, que la couche transparente et comprenant en outre une matière absorbant le rayonnement.

2. Procédé selon la revendication 1,
**caractérisé en ce que** la bande bicouche est transformée en bande orientée en passant une feuille bicouche sortant de la filière dans une calandre lisseuse suivi par un conditionnement thermique en passant sur un groupe de cylindres de conditionnement suivi d'un étirage.

3. Procédé selon la revendication 2,
**caractérisé en ce que** le conditionnement thermique de la bande bicouche est suivi d'un étirage en deux passes successives dans un train d'étirage dont les cylindres évoluent à vitesse croissante.

4. Procédé selon la revendication 3,
**caractérisé en ce que** après l'étirage la bande a ensuite été refroidie et subi un léger retrait de l'ordre de 10 % dans le sens longitudinal.

5. Procédé d'assemblage de bandes multicouches selon une des revendications 1 à 4, **caractérisé en ce qu'**on utilise des bandes multicouches constituées d'un polymère thermoplastique choisies parmi les polyoléfines, les polyhalogénures de vinyle, les polyesters thermoplastiques, les polycétones, les polyamides et leurs copolymères.

6. Procédé selon la revendication 5,
**caractérisé en ce que** le polymère thermoplastique est un polyoléfine, de préférence un polyéthylène de haute densité.

7. Procédé selon une des revendications 5 ou 6,
**caractérisé en ce que** la matière responsable de l'absorption du rayonnement électromagnétique dans la couche absorbante est du noir de carbone.

8. Procédé selon une des revendications 1 à 7,
**caractérisé en ce que** le support tubulaire est en matière plastique non orientée.

## Patentansprüche

1. Verfahren zum Fügen von mehrschichtigen Bändern, die aus einem thermoplastischen Polymeren bestehen, mit Hilfe elektromagnetischer Strahlung, zur Herstellung eines verstärkten Rohrs, mittels wenigstens einer Schicht von Bändern aus orientiertem Kunststoff, wobei die Bänder auf einen rohrförmigen Träger aufgerollt und verschweißt werden,
**dadurch gekennzeichnet, dass** man mehrschichtige Bänder verwendet, die wenigstens eine Schicht aus einem Kunststoff umfassen, der in wenigstens einer Richtung orientiert ist und für diese elektromagnetische Strahlung transparent ist, wobei die Bänder geeignet sind, mit Hilfe der elektromagnetischen Strahlung mit einer Seite auf den vorgeformten Träger aus Kunststoff geschweißt zu werden, wobei die Bänder wenigstens eine weitere Schicht umfassen, die ein Material umfasst, das diese elektromagnetische Strahlung absorbiert,
wobei die Bänder erhalten werden in einem Herstellungsverfahren durch Coextrusion, gefolgt von einem Strecken, wobei diese Bänder entweder zweischichtige Bänder sind, die durch Coextrusion durch eine flache Düse hergestellt sind, oder mehrschichtige Bänder, die aus einer einzigen Schicht eines orientierten transparenten Materials bestehen, welches zwischen zwei dünneren Schichten liegt, die das gleiche Kunststoffmaterial umfassen, orientiert in der gleichen Richtung wie die transparente Schicht und umfassend im Übrigen ein Material, welches diese Strahlung absorbiert.

2. Verfahren nach Anspruch 1,
**dadurch gekennzeichnet, dass** das zweischichtige Band in ein orientiertes Band umgewandelt wird, indem man eine zweischichtige Folie, die aus der Düse austritt durch einen Glättkalander schickt, wonach eine thermische Behandlung folgt, durch Führen über eine Gruppe von Behandlungsrollen, gefolgt von einem Strecken.

3. Verfahren nach Anspruch 2,
**dadurch gekennzeichnet, dass** die thermische Behandlung des zweischichtigen Bandes gefolgt wird von einem Strecken in zwei aufeinander folgenden Arbeitsgängen in einem Streckzug, dessen Walzen sich mit zunehmender Geschwindigkeit drehen.

4. Verfahren nach Anspruch 3,
**dadurch gekennzeichnet, dass** das Band nach dem Strecken abgekühlt wurde und einem leichten Schwund in der Größenordnung von 10 % in Längsrichtung unterlag.

5. Verfahren zum Fügen mehrschichtiger Bänder gemäß einem der Ansprüche 1 bis 4, **dadurch gekennzeichnet, dass** man mehrschichtige Bänder verwendet, die aus einem thermoplastischen Polymeren bestehen, ausgewählt aus den Polyolefinen, den Polyvinylhalogeniden, den thermoplastischen Polyestern, den Polyketonen, den Polyamiden und deren Copolymeren.

6. Verfahren nach Anspruch 5, **dadurch gekennzeichnet, dass** das thermoplastische Polymere ein Polyolefin ist, vorzugsweise ein Polyethylen hoher Dichte.

7. Verfahren nach Anspruch 5 oder 6, **dadurch gekennzeichnet, dass** das für die Absorption der elektromagnetischen Strahlung in der absorbierenden Schicht verantwortliche Material Ruß ist.

8. Verfahren nach einem der Ansprüche 1 bis 7, **dadurch gekennzeichnet, dass** der rohrförmige Träger aus einem nicht orientierten Kunststoff besteht.

## Claims

1. A method for assembling multilayer strips, which are constituted by a thermoplastic polymer, with the aid of electromagnetic radiation for the production of a tube reinforced by at least one layer of strips of orientated plastic material, the strips being rolled up and welded around a support of tubular shape,
**characterised in that** use is made of multilayer strips,
comprising at least one layer of plastic material, orientated in at least one direction and transparent to this electromagnetic radiation,
the strips being capable of being welded with the aid of electromagnetic radiation with a face on the preformed support of plastic material,
the strips comprising at least one other layer comprising a material absorbing this electromagnetic radiation,
these strips are obtained in a method of production by coextrusion followed by drawing, and these strips are either bi-layer strips produced by coextrusion in a flat die
or multilayer strips which are constituted by a single layer of transparent orientated material located between two thin layers comprising the same plastic material, orientated in the same direction as the transparent layer and further comprising a radiation-absorbing material.

2. The method according to claim 1,
**characterised in that** the bi-layer strip is transformed into an orientated strip by passing a bi-layer sheet exiting from the die into a smoothing calendar followed by thermal conditioning by passing over a group of conditioning cylinders followed by drawing.

3. The method according to claim 2,
**characterised in that** the thermal conditioning of the bi-layer strips is followed by drawing in two successive passes in a drafting arrangement, the cylinders whereof rotate with an increasing speed.

4. The method according to claim 3,
**characterised in that**, after the drawing, the strip was then cooled and underwent a slight shrinkage of the order of 10% in the longitudinal direction.

5. The method for assembling multilayer strips according to any one of claims 1 to 4, **characterised in that** use is made of multilayer strips constituted by a thermoplastic polymer selected among polyolefins, polyvinyl halides, thermoplastic polyesters, polyketones, polyamides and their copolymers.

6. The method according to claim 5,
**characterised in that** the thermoplastic polymer is a polyolefin, preferably a high density polyethylene.

7. The method according to any one of claims 5 or 6, **characterised in that** the material responsible for the absorption of electromagnetic radiation in the absorbent layer is carbon black.

8. The method according to any one of claims 1 to 7,
**characterised in that** the tubular support is made of non-orientated plastic material.
